# EUROPÄISCHE PATENTSCHRIFT

(11) **EP 0 438 027 B1**
(45) Veröffentlichungstag und Bekanntmachung des Hinweises auf die Patenterteilung: **28.04.1993**
(21) Anmeldenummer: 90810032.4
(22) Anmeldetag: 16.01.1990
(51) Int. Cl.: H01F 5/04

(54) **Verfahren zur Herstellung eines elektrischen Anschlusses, nach diesem Verfahren hergestelltes Gerät oder Element und Anlage zur Durchführung des Verfahrens**
Electrical connexion fabricating method,apparatus or element produced with this method and device for the execution of this method
Procédé de réalisation d'une connexion électrique, appareil ou élément produit selon ce procédé et dispositif de mise en oeuvre de ce procédé

(43) Veröffentlichungstag der Anmeldung: 24.07.1991
(73) Patentinhaber: SAIA AG, CH-3280 Murten (CH)
(72) Erfinder: Mertenat, Olivier, CH-1752 Villar sûr Glâne (CH)
(74) Vertreter: Steiner, Martin

(56) Entgegenhaltungen:
- DE-A- 2 333 867
- US-A- 2 486 751
- US-A- 4 720 646

## Beschreibung

Die vorliegende Erfindung betrifft ein Verfahren zur Herstellung eines Anschlusses an einem Anschlussträger eines elektrischen Gerätes oder Elementes, insbesondere eines Spulenkörpers eines kleinen Elektromotors. Solche Anschlüsse bzw. Verfahren zu ihrer Herstellung sind in verschiedensten Ausführungen bekannt z.B. aus DE-A-2 333 867. Ziel vorliegender Erfindung ist es, die Herstellung des Anschlusses besonders rationell zu gestalten, insbesondere die automatische Herstellung der Anschlüsse an einem Gerät oder Element in einfacher Weise zu erlauben. Dieses Ziel kann gemäss Anspruch 1 erreicht werden. Die Herstellung von Anschlussleitern als einfache Stanzteile ist besonders wirtschaftlich. Sodann können diese Stanzteile mit geringem Aufwand mit dem Anschlussträger verbunden werden und zwar in einer Lage, welche deren Verbindung mit Zuleitungen bzw. Leitern des Gerätes vorteilhaft erlaubt. Schliesslich kann der Stanzteil bzw. der oder die Anschlussleiter in die endgültige Form gebracht werden, in welcher er bzw. sie platzsparend am Gerät oder Element anliegt bzw. anliegen.

Normalerweise erfolgt der Anschluss mindestens zweipolig, d.h. es sind mindestens zwei voneinander isolierte Anschlussleiter erforderlich. In diesem Falle ist eine besonders vorteilhafte Herstellung gemäss Anspruch 2 möglich. Dabei wird ein einziger zusammenhängender Stanzteil vorerst mit dem Anschlussträger verbunden, dann werden die einzelnen Anschlussleiter voneinander getrennt um die verschiedenen Verbindungen mit den Zuleitungen bzw. Leitern, insbesondere Wicklungsdrähten des Gerätes oder Elementes vorzunehmen, und schliesslich werden die verbundenen Enden der Anschlussleiter in ihre endgültige Lage gebracht.

Die Erfindung betrifft auch einen nach dem erwähnten Verfahren hergestellten Anschluss eines Gerätes oder Elementes gemäss Anspruch 5.

Schliesslich betrifft die Erfindung auch eine Anlage zur Durchführung des genannten Verfahrens. Anspruch 8 nennt die wesentlichen Teile dieser Anlage.

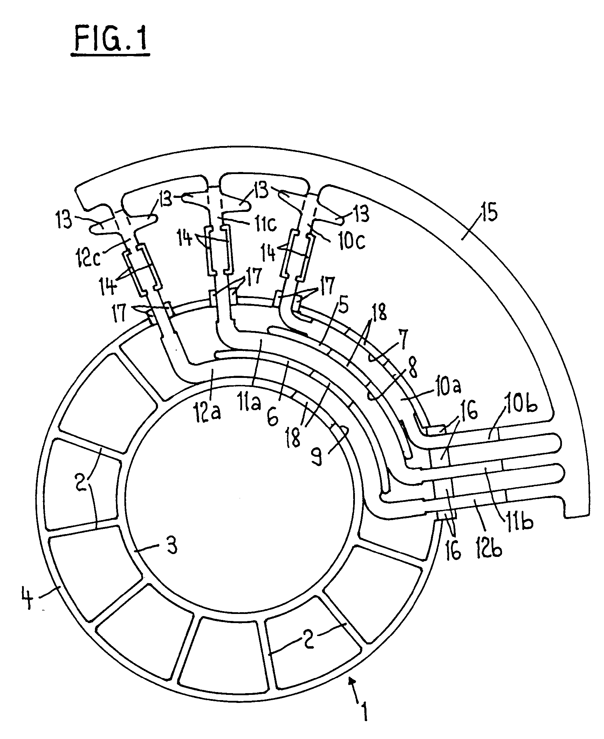

Die Erfindung wird nun anhand eines in der Zeichnung dargestellten Ausführungsbeispiels erläutert. Die Figuren 1-4 zeigen je eine Stirnansicht eines Spulenkörpers in verschiedenen Stadien der Herstellung des elektrischen Anschlusses.

Die Figuren zeigen die eine Stirnseite eines im wesentlichen zylindrischen Spulenkörpers 1. An der dargestellten Stirnseite ist der Spulenkörper auf einem bestimmten Teil des Umfangs durch Rippen 2 versteift, welche einen Ringraum zwischen einer inneren Rippe 3 und einer äusseren Rippe 4 in Kammern aufteilen. In einem bestimmten, etwa 90° umfassenen Bereich sind zwischen der inneren Rippe 3 und der äusseren Rippe 4, durch Zwischenrippen 5 und 6, bogenförmige Nuten 7,8 und 9 gebildet. In den Nuten 7-9 liegen kreisbogenförmige Abschnitte 10a, 11a und 12a von Anschlussleitern. Jeder Anschlussleiter weist zwei radial vorstehende Endteile, nämlich Endteile 10b,11b und 12b, sowie 10c,11c und 12c auf. Während die Endteile 10b,11b und 12b einfache ebene Zungen sind weisen die Endteile 10c,11c und 12c seitliche Lappen 13 und hochstehende Stege 14 auf, die der später beschriebenen Verbindung mit Zuleitungen dienen.

Die Anschlussleiter 10, 11 und 12 sind mit einer kreisbogenförmigen Brücke 15 verbunden. Sie stellen mit dieser Brücke zusammen einen einzigen Stanzteil dar, der rationell und preisgünstig hergestellt und bei der Montage einfach manipuliert werden kann. Gemäss Figur 1 ist dieser Stanzteil lediglich lose in die Nuten 7-9 eingelegt, wobei die Endteile 10b, 11b und 12b zwischen von der äusseren Rippe 4, axial vorstehenden Nocken 16 durchgreifen, während die Endteile 10c,11c und 12c zwischen ähnlichen vorstehenden Nocken 17 durchgreifen. In der Mitte der bogenförmigen Teile 10a,11a und 12a der Anschlussleiter sind die Rippen 3,4,5 und 6 ebenfalls mit axial vorstehenden Nocken 18 versehen.

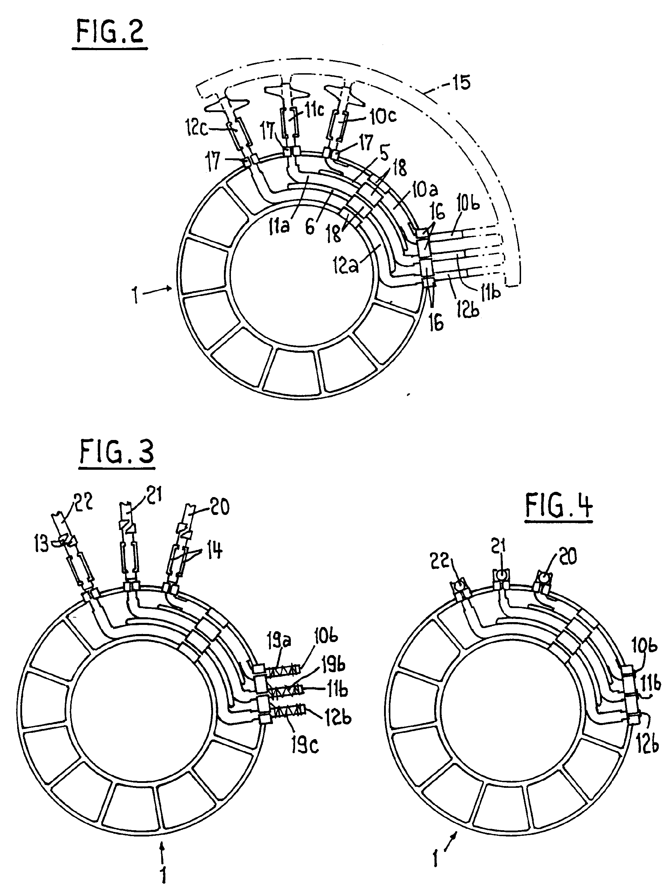

Nachdem der Stanzteil gemäss Figur 1 lose eingelegt worden ist, werden in einem weiteren Arbeitsgang gemäss Figur 2, die Nocken 16, 17 und 18 verformt und damit der ganze Stanzteil aber auch jeder Anschlussleiter 10,11 und 12 desselben für sich fest mit dem Spulenkörper 1 verbunden. Der Spulenkörper 1 besteht vorzugsweise aus thermoplastischen Kunststoff, so dass die Verformung der Nocken 16-18 sehr einfach durch Erwärmung und Druck erfolgen kann.

Nachdem der Stanzteil gemäss Figur 2 mit dem Spulenkörper 1 verbunden ist, wird die Brücke 15 von den Anschlussleitern 10,11 und 12 abgeschnitten wodurch die Anschlussleiter mechanisch und elektrisch voneinander getrennt werden, so dass nun ihre Endteile 10b,11b und 12b sowie 10c,11c und 12c frei radial nach aussen vorstehen und gut zugänglich sind.

Gemäss Figur 3 werden in einem weiteren Arbeitsgang Anschlussdrähte 19a,19b und 19c einer auf dem Spulenkörper 1 befindlichen Wicklung auf die Endteile 10b, 11b und 12b der Anschlussleiter gewickelt und mit denselben verlötet.

In einem weiteren Arbeitsgang werden Zuleitungen 20,21 und 22 mit den Enden 10c,11c bzw. 12c der Anschlussleiter verbunden, indem die Lappen 13 und die Rippen 14 um die bzw. gegen die Anschlussleiter gepresst werden um eine zuverlässige elektrische und mechanische Verbindung zu erstellen.

In einem letzten Arbeitsgang gemäss Figur 4 werden nun die Enden der Anschlussleiter nach innen auf die Mantelfläche des Spulenkörpers 1 gebogen, womit die ganze Spule mit den Anschlüssen fertiggestellt ist. Sie kann nun vereinigt werden mit den Statorteilen eines Motors, beispielsweise eines Kleinsynchronmotors oder -schrittmotors. Bei diesem Zusammenbau oder in einem separten Arbeitsgang können die auf die Mantelfläche des Spulenkörpers 1 gebogenen Enden der Anschlussleiter in dieser Lage gesichert werden.

Es sind verschiedene Ausführungsvarianten möglich. Ein zweipoliger Anschluss kann genau gleich erstellt werden, mit dem Unterschied, dass nur zwei Anschlussleiter erforderlich sind. Eine besondere Vereinfachung liegt beim dargestellten Ausführungsbeispiel darin, dass ein im wesentlichen flacher Stanzteil verwendet kann. Es wäre aber auch denkbar, dass in entsprechender Weise ein gewölbter Stanzteil mit radial nach aussen stehenden Enden der Anschlussleiter auf der Mantelfläche des Spulenkörpers auf einem über der Wicklung angebrachten Anschlussträger befestigt würde, worauf in entsprechender Weise die Anschlüsse erstellt und die Enden der Anschlussleiter in die Mantelfläche des Spulenkörpers gebogen würden. Entsprechende Ausführungen sind auch bei anderen elektrischen Geräten oder Elementen möglich wobei z.B. die Enden 10b, 11b und 12b der Anschlussleiter mit Heizdrähten eines Gerätes verbunden sein könnten, während die Enden 10c,11c und 12c in der dargestellten Weise mit Zuleitungen verbunden sein könnten.

Wie erwähnt, eignet sich die dargestellte Ausführungsform ganz besonders für eine rationelle weitgehend mechanisierte und automatisierte Fertigung. Alle Partien des Stanzteils an denen nachträglich Operationen vorzunehmen sind, stehen bis zum Abschluss dieser Operationen frei über den Spulenkörper vor und sind gut zugänglich sei es zum Abtrennen der Brücke 15, sei es zum Anbringen der Spulenanschlüsse, sei es zum Anbringen der Zuleitungen. Es ist daher möglich, alle beschriebenen Operationen in verhältnismässig einfachen Bearbeitungsstationen gemäss Anspruch 9 rationell und gegebenenfalls vollautomatisch durchzuführen. Es kann insbesondere eine Fabrikationsstrasse mit diesen Stationen zur automatischen Erstellung der Anschlüsse vorgesehen werden.

## Patentansprüche

1. Verfahren zur Herstellung eines Anschlusses an einem Anschlussträger eines elektrischen Gerätes oder Elementes, insbesondere eines Spulenkörpers (1), wobei ein leitender Stanzteil (10,11,12,15) am Anschlussträger (1) befestigt und die freien Enden (10b-12b, 10c-12c) des Stanzteils mit je einer Zuleitung (20,21,22) bzw. einem Leiter (19) des Gerätes oder der Komponente verbunden werden,
dadurch gekennzeichnet, dass der Stanzteil (10-12, 15) eben ausgebildet ist und
an der Stirnseite eines im wesentlichen zylindrischen Anschlussträgers, z.B. eines Wicklungskörpers (1), in Nuten eingelegt und, in diesen befestigt wird, und die mit den Zuleitungen und dem Leiter (19) zu verbindenden, radial frei vorstehenden Enden der Anschlussleiter voneinander getrennt, elektrisch verbunden und an die Mantelfläche des Anschlussträgers gebogen werden.

2. Verfahren nach Anspruch 1, zur Erstellung eines mehrpoligen Anschlusses, dadurch gekennzeichnet, dass der Stanzteil (10-12,15) mit mehreren Anschlussleitern (10-12) vorbereitet wird, dann eine die Anschlussleiter verbindende Brücke (15) des Stanzteils abgetrennt und dann die verbleibenden Enden (10b-12b, 10c-12c) der getrennten Anschlussleiter mit je einer Zuleitung (20,21,22) bzw. einem Leiter (19) des Gerätes bzw. Elementes verbunden werden.

3. Verfahren nach Anspruch 1 oder 2, dadurch gekennzeichnet, dass jedes zur Verbindung mit einer Zuleitung (20,21,22) bestimmte freie Ende mit Lappen (13) versehen wird, die zur mechanischen Verbindung um die Zuleitung gelegt und gepresst werden.

4. Verfahren nach einem der Ansprüche 1-3, dadurch gekennzeichnet, dass der Anschlussträger (1) aus thermoplastischem Kunststoff zur Befestigung der Anschlussleiter (10-12) des Stanzteils erhitzt und verformt wird.

5. Nach dem Verfahren gemäss Anspruch 1 oder 2 hergestellter Anschluss eines Gerätes oder Elementes, mit einem Anschlussträger (1) und daran befestigten Anschlussleitern (10-12) die einerseits mit Zuleitungen (20, 21, 22) und andererseits mit Leitern (19) des Gerätes oder Elementes verbunden sind, dadurch gekennzeichnet, dass U-förmige Anschlussleiter (10-12) parallel zueinander am Anschlussträger (1) befestigt sind und dass Enden (10b-12b, 10c-12c) der Anschlussleiter an den Anschlussträger (1) gelegt sind.

6. Anschluss eines Gerätes oder Elementes nach Anspruch 5, dadurch gekennzeichnet, dass die Anschlussleiter (10-12) in Nuten des Anschlussträgers liegen und ihren Enden quer zu den Nuten gebogen sind.

7. Anschluss eines Gerätes oder Elementes nach Anspruch 6, dadurch gekennzeichnet, dass die Anschlussleiter (10-12) in Nuten (7-9) an einer Stirnseite des Anschlussträgers (1) liegen und dass ihre Enden an die Mantelseite des Anschlussträgers gebogen sind.

8. Anlage zur Durchführung des Verfahrens nach Anspruch 1 oder 2, mit einem Stanzwerkzeug zur Herstellung des Stanzteils, einer Station zum Anbringen und Befestigen des Stanzteils am Anschlussträger, einer Station zum Trennen der Anschlussleiter des Stanzteils durch Abtrennen der sie verbindenden Brücke, mindestens einer Station zum Verbinden der freien Enden der Anschlussleiter mit je einem Leiter des Gerätes oder Elementes bzw. einer Zuleitung, und einer Station zum Heranbiegen der Enden der Anschlussleiter an den Anschlussträger.

9. Anlage nach Anspruch 8, mit Mitteln zum Abschneiden der Brücke von radial vorstehenden Enden der Anschlussleiter.

## Claims

1. Method for the production of a connection at the connector support of an electric appliance or element, in particular of a coil shell (1), a conductive punched portion (10,11,12,15) being attached to said connector support (1) and the free ends (10b-12b, 10c-12c) of said punched portion being connected to a respective lead (20,21,22) and to a conductor (19), respectively, of said appliance or component, characterized in that said punched portion (10-12, 15) has a flat configuration and is inserted in grooves on the front side of a substantially cylindrical connector support, e.g. of a coil shell (1), and secured therein, and that the radially freely projecting ends of the connecting conductors to be connected to the leads and to the conductor (19) are separated from each other, electrically connected and bent towards the lateral surface of said connector support.

2. Method according to claim 1, for the production of a multicontact connection, characterized in that said punched portion (10-12,15) is prepared with a plurality of connecting conductors (10-12), then a bridge (15) of said punched portion connecting said connecting conductors is removed, and the remaining ends (10b-12b, 10c-12c) of the separated connecting conductors are subsequently conected to a respective lead (20,21,22) and to a conductor (19), respectively, of said appliance or element.

3. Method according to claim 1 or 2, characterized in that each free end intended to be connected to a lead (20,21,22) is provided with tabs (13) which are placed around said lead and pressed for a mechanic connection.

4. Method according to any one of claims 1 to 3, characterized in that said connector support (1), made of a thermoplastic synthetic material, is heated and deformed in order to secure the connecting conductors (10-12) of said punched portion.

5. Connecting terminal of an appliance or element produced according to the method of claim 1 or 2, comprising a connector support (1) and connecting conductors (10-12) secured thereto which are connected to leads (20,21,22), on one hand, and to conductors (19) of said appliance or element, on the other hand, characterized in that U-shaped connecting conductors (10-12) are secured in parallel to the connector support (1), and that ends (10b-12b, 10c-12c) of said connecting conductors are joined to said connector support (1).

6. Connecting terminal of an appliance or element according to claim 5, characterized in that said connecting conductors (10-12) are disposed in grooves of said connector support and that their ends are bent transversally with respect to said grooves.

7. Connecting terminal of an appliance or element according to claim 6, characterized in that said connecting conductors (10-12) are disposed in grooves (7-9) at one front side of said connector support (1), and that their ends are bent towards the lateral surface of said connector support.

8. Device for implementing the method of claim 1 or 2, comprising a punching tool for the manufacture of said punched portion, a station for attaching and securing said punched portion to said connector support, a station for separating the connecting conductors of said punched portion by removing the connecting bridge, at least one station for connecting the free ends of the connecting conductors to a respective conductor of said appliance or element or to a lead, respectively, and a station for bending the ends of the connecting conductors to said connector support.

9. Device according to claim 8, comprising means for cutting the bridge of radially projecting ends of the connecting conductors.

## Revendications

1. Procédé pour la production d'un raccordement à un support de connexion d'un appareil ou élément électrique, en particulier d'une armature de bobine (1), une pièce de découpage conductrice (10,11,12,15) étant attachée au support de raccordement (1), et les extrémités libres (10b-12b, 10c-12c) de la pièce de découpage étant chaque fois reliées à un conducteur d'amenée (20,21,22) et à un conducteur (19) de l'appareil ou du composant, caractérisé en ce que la pièce découpée (10-12, 15) est de configuration plate et est insérée et attachée dans des rainures sur le côté frontal d'un support de raccordement essentiellement cylindrique, par exemple d'une armature de bobine (1), et que les extrémités libres, radialement en saillie, des conducteurs de raccordement, qui sont à relier aux conducteurs d'amenée et au conducteur (19), sont séparées, électriquement reliées et pliées vers la surface latérale du support de raccordement.

2. Procédé selon la revendication 1, pour la production d'un raccordement multipolaire, caractérisé en ce que la pièce de découpage (10-12,15) est préparée avec une pluralité de conducteurs de raccordement (10-12), qu'un pont (15) de la pièce de découpage reliant les connecteurs de raccordement est ensuite enlevé, et que les extrémités restantes (10b-12b, 10c-12c) des conducteurs de raccordement sont par la suite reliées chaque fois à un conducteur d'amenée (20,21,22) ou à un conducteur (19) de l'appareil ou de l'élément.

3. Procédé selon la revendication 1 ou 2, caractérisé en ce que chaque extrémité libre destinée à être reliée à un conducteur d'amenée (20,21,22) est pourvue de lobes (13) qui sont placés autour du conducteur d'amenée et pressés en vue d'une connexion mécanique.

4. Procédé selon l'une quelconque des revendications 1 à 3, caractérisée en ce que le support de raccordement (1) en matière synthétique thermoplastique est chauffé et déformé pour fixer les conducteurs de raccordement (10-12) de la pièce de découpage.

5. Raccordement d'un appareil ou élément produit selon la revendication 1 ou 2, comprenant un support de raccordement (1) et des conducteurs de raccordement (10-12) y attachés qui sont reliés, d'une part, à des conducteurs d'amenée (20,21,22) et, d'autre part, à des conducteurs (19) de l'appareil ou élément, caractérisé en ce que des conducteurs de raccordement (10-12) en forme de U sont fixés parallèlement au support de raccordement (1), et que des extrémités (10b-12b, 10c-12c) des conducteurs de raccordement sont rapprochées au support de raccordement (1).

6. Raccordement d'un appareil ou élément selon la revendication 5, caractérisé en ce que les conducteurs de raccordement (10-12) sont disposés dans des rainures du support de raccordement, et que leurs extrémités sont pliées transversalement par rapport aux dites rainures.

7. Raccordement d'un appareil ou élément selon la revendication 6, caractérisé en ce que les conducteurs de raccordement (10-12) sont disposés dans des rainures (7-9) à l'un des côtés frontaux du support de raccordement (1), et que leurs extrémités sont pliées vers la surface latérale du support de raccordement.

8. Dispositif pour la mise en oeuvre du procédé selon la revendication 1 ou 2, comprenant un outil de découpage pour la fabrication de la pièce de découpage, une station pour mettre en place et fixer la pièce de découpage au support de raccordement, une station pour séparer les conducteurs de raccordement de la pièce de découpage en enlevant le pont qui les relie, au moins une station pour relier chacune les extrémités libres des conducteurs de raccordement à un conducteur de l'appareil ou élément ou à un conducteur d'amenée, et une station pour plier les extrémités des conducteurs de raccordement vers le support de raccordement.

9. Dispositif selon la revendication 8, comprenant des moyens pour couper le pont d'extrémités radialement en saillie des conducteurs de raccordement.
